# EUROPÄISCHE PATENTSCHRIFT

(11) **EP 3 355 672 B1**
(45) Veröffentlichungstag und Bekanntmachung des Hinweises auf die Patenterteilung: **22.01.2020**
(21) Anmeldenummer: 17754677.7
(22) Anmeldetag: 11.08.2017
(51) Int. Cl.: A01G 31/02, A01G 9/029, A01G 31/06, A01C 1/02, A01C 1/04

(54) **VORKONFEKTIONIERTE SAATENPACKEINHEIT**
PREFABRICATED SEED PACKAGING UNIT
UNITÉ DE CONDITIONNEMENT DE SEMENCES PRÉCONFECTIONNÉE

(30) Priorität: 23.08.2016 DE 102016115650
(43) Veröffentlichungstag der Anmeldung: 08.08.2018
(73) Patentinhaber: Teips, Josef, 73430 Aalen (DE)
(72) Erfinder: Teips, Josef, 73430 Aalen (DE)
(74) Vertreter: Raunecker, Klaus Peter
(86) Internationale Anmeldenummer: PCT/EP2017/070467
(87) Internationale Veröffentlichungsnummer: WO 2018/036844

(56) Entgegenhaltungen:
- CN-U- 204 498 618
- CN-U- 204 634 316
- DE-U1-202016 104 616
- FR-B1- 2 779 028
- KR-B1- 101 212 130
- US-A1- 2012 266 535
- US-A1- 2013 068 636

## Beschreibung

Die Erfindung betrifft eine vorkonfektionierte Saatenpackeinheit zur Bestückung eines Wässerungsautomaten insbesondere für die Zucht von Sprossen und/oder Keimlingen.

Als auskeimungsfähige Nahrungsmittel sind eine Vielzahl von Samen von Getreiden und Wildkräutern, Bohnen sowie die Samen von Gemüsen und einige Nusssorten bekannt. Durch den Auskeimungsprozess und das resultierende Sprossenwachstum findet eine Vermehrung von Vitaminen statt. Des Weiteren werden im unausgekeimten Saatgut enthaltene, für den menschlichen Körper unverträgliche Stoffe, wie Phytinsäure, die im Darm die Aufnahme von Mineralstoffen bremst, durch das Auskeimen abgebaut. Daher stellen frischgewachsene Sprossen, Keimlinge und bereits Chlorophyllbestandteile enthaltende Austriebe wichtige Quellen einer vitalstoffreichen Ernährung dar. Ebenso kann es wünschenswert sein, Saaten lediglich durch Quellen zum Verzehr vorzubereiten, ohne dass ein Auskeimen stattfindet.

Die Verwendung von ausgekeimten Lebensmitteln als Nahrungsergänzung setzt voraus, dass diese hygienisch verarbeitet und möglichst erntefrisch dem Verbraucher zur Verfügung gestellt werden. Da das Wachstum von Bakterien, Viren und Pilzen in feuchtigkeitskonservierenden Umverpackungen geernteter Sprossen und Keimlingen oftmals nicht sicher ausgeschlossen werden kann, wünscht der Verbraucher oftmals, die Sprossen- und Keimlingszucht selbst auszuführen, um ein erntefrisches und bezüglich der Zuchtbedingungen kontrolliertes Nahrungsprodukt zu erhalten.

Für die Sprossenzucht muss das auskeimfähige Saatgut zunächst abgespült und auf einem Träger, der sowohl eine gute Befeuchtung als auch eine hinreichende Durchlüftung sicherstellt, verteilt werden. Wesentlich ist eine regelmäßige, typische zwei- bis dreimal tägliche Befeuchtung und ein Abstellort mit einer Temperatur im Bereich von 18 bis 25°C. Unter diesen Bedingungen können beispielsweise Soja- oder Mungbohnensprossen innerhalb von etwa fünf Tagen auskeimen und die Sprossen zu einer verzehrgeeigneten Länge heranwachsen. Während der eigentliche Auskeimungsprozess, das Sprossen, im Dunkeln möglich ist, bedarf es für das Wachstum chlorophyllhaltiger Austriebe einer hellen Umgebung, wobei direkte Sonneneinstrahlung für das anfänglich noch empfindliche Keimlingswachstum zu vermeiden ist.

Um die Bedingung einer konstanten Befeuchtung einer auskeimungsfähigen Saat bei einer Heimzucht sicherzustellen, ist die Verwendung typischerweise gestapelter, aus transparentem Kunststoff bestehender, verschließbarer Keimkästen bekannt. Hierzu wird beispielhaft auf DE 8707890 U1, GB 2033714 A und KR 101 212 130 B1 verwiesen. Die regelmäßige Befeuchtung erfolgt über eine Wasserzugabe zum obersten, mit einem Deckel abdeckbaren Keimkasten der Stapelabfolge. Durch Abtropföffnungen im Bodenbereich der jeweiligen Keimkästen wird ein Wasserüberschuss zur jeweils darunterliegenden Lage und schlussendlich zu einem Sammelreservoir unterhalb der Keimkästen geleitet. Zum Zurückhalten einer hinreichenden Restfeuchtigkeit weisen die Bodenbereiche der Keimkästen typischerweise eine den Kapillareffekt nutzende Riffelung oder ein zusätzliches feuchtigkeitsaufsaugendes Element, wie einen Vliesstoff, auf.

Eine für den Verkauf ausgekeimter Sprossen geeignete Keimkastenanordnung ist aus der WO 1981001941 A1 bekannt. Beschrieben wird ein becherförmiges Aufnahmegefäß mit einem wasserdurchlässigen Bodenbereich, der als Träger für zu keimendes Saatgut dient. Das becherförmige Aufnahmegefäß ist so in einem äußeren Auffangbehälter gehaltert, dass ein Sammelreservoir für überschüssiges Wasser unter dem Keimgut entsteht. Zusätzlich erlaubt ein Deckel auf dem becherförmigen Aufnahmegefäß den Zugang für das regelmäßige Bewässern, um eine für das Keimen geeigneten Atmosphäre mit hoher Feuchtigkeit aufrechtzuerhalten. Nach dem Auskeimen und einem für die Vermarktung ausreichendem Sprossenwachstum wird das Aufnahmegefäß mitsamt Deckel aus dem Auffangbehälter entnommen und dient dann als Verpackungseinheit für den Transport und das Anbieten der Sprossen. Nachteilig an der offenbarten Keimkastenanordnung ist der für das Ansetzen der Zucht und die regelmäßige Befeuchtung zu betreibende Aufwand. Zunächst muss vom Benutzer das separat verpackte auskeimungsfähige Saatgut in das Aufnahmegefäß eingefüllt und dann die gesamte Anordnung zusammengesetzt werden. Sodann sind die ersten Wasch- und Befeuchtungsschritte auszuführen. Regelmäßig muss der Verschlussdeckel des Aufnahmegefäßes abgenommen und eine genau dosierte Wassermenge eingefüllt werden, die sicherstellt, dass das auskeimungsfähige Saatgut hinreichend befeuchtet wird, aber nicht dauerhaft in das Flüssigkeitsreservoir im Auffangbehälter eintaucht.

Keimkästen lassen sich zu dekorativen Sprossengärten kombinieren. Nachteilig ist jedoch der hohe, da regelmäßig auszuführende Aufwand für die Bewässerung sowie für die sorgfältige Reinigung nach dem Abernten. Daher besteht ein Bedarf, das Auskeimverfahren zu automatisieren, sodass eine Sprossen- und Keimlingszucht über den Zeitraum mehrerer Tage keines Benutzereingriffs bedarf. Eine mögliche Ausführung wird durch die EP 167638 A1 beschrieben, die vorschlägt, einen schwimmfähigen Keimgutträger auf einem feine Kanäle aufweisenden Wassertransportelement zu platzieren und diese Kombination in einem hinreichend großen Wasserreservoir zu setzen. Durch die feinen Kanäle im Wassertransportelement wird durch den Kapillareffekt permanent eine für die Befeuchtung hinreichende Wassermenge zum Saatgut transportiert. Nachteilig an der genannten Anordnung ist, dass eine Anpassung des Wasserbedarfs für unterschiedliches Keimgut eines Austauschs des Wassertransportelements bedarf, sodass nur eine beschränkte Auswahl auskeimfähiger Nahrungsmittel für dieses Verfahren infrage kommt. Als Alternative sind Wässerungsautomaten bekannt, die die Methoden des hydroponischen Pflanzenanbaus verwenden. Durch Pumpen und Berieslungstechnik wird auf wasserdurchlässigen Trägern, typischerweise siebenlagerndes Auskeimgut, regelmäßig befeuchtet. Beispielhaft wird auf US 20120266535 A1, KR 102015107959 A, FR 2779028 B1, DE 202008016368 U1 und DE 20019538 U1 verwiesen. Für weitere Ausführungen werden anstatt eines Sprinklers Bewässerungssysteme verwendet, die ein kurzseitiges vollständiges Tauchen der auf dem Träger befindlichen Sprossen und Keimlinge ermöglichen. Ferner sind Verfahren bekannt, die anstatt einer Tropfenberegnung einen Wassernebel zur Befeuchtung verwenden. Derartige Nebelerzeuger für Wässerungsautomaten werden beispielsweise in DE 202006016559 U1 beschrieben. Eine Weiterentwicklung ist in WO 2015140245 A1 genannt, die vorschlägt, nach einem Ultraschalltröpfchengenerator ein Filterelement zu verwenden, um für eine möglichst homogene Befeuchtung die Tröpfchengröße sicher im Sub-Millimeterbereich zu halten. Durch diese Maßnahme kann eine möglichst gleichmäßige Auskeimung bewirkt werden.

Neben der gesteuerten Befeuchtung weisen Wässerungsautomaten typischerweise Systeme zur Zwangsbelüftung auf. Ferner können Heizeinrichtungen vorgesehen werden. Des Weiteren setzen die Reservoir- und Leitungssysteme Vorkehrungen für das Spülen und Reinigen voraus, sodass eine komplexe Bedienung für Wässerungsautomaten resultiert. Zusätzlich bedarf es einer längeren Erfahrung, um den notwendigen Befeuchtungsbedarf für unterschiedliche auskeimungsfähige Lebensmittel zu ermitteln. Daher vereinfachen Wässerungsautomaten zwar die Ausführung der Sprossen- und Keimlingszucht, verlangen aber eine gewisse Benutzungsexpertise.

Eine vorkonfektionierte Saatenpackeinheit ist weiter in DE 202016104616 U1 beschrieben.

Der vorliegenden Erfindung liegt die Aufgabe zugrunde, die vorne genannten Nachteile des Standes der Technik zu überwinden und eine Vorrichtung zur Zucht von Sprossen und/oder Keimlingen anzugeben, die von einem unerfahrenen Benutzer sicher und mit möglichst geringem Aufwand verwendet werden kann.

Die der Erfindung zugrundeliegende Aufgabe wird durch die Vorrichtung mit den in dem unabhängigen Anspruch aufgeführten Merkmalen gelöst. Vorteilhafte Ausführungsformen und Varianten der Erfindung ergeben sich aus den Unteransprüchen.

Der Erfindung liegt die Erkenntnis zugrunde, dass eine Saat insbesondere zur Bildung von Sprossen und/oder Keimlingen nicht separat verpackt und von einem Benutzer eines Wässerungsautomaten beim Ansetzen einer Zucht händisch auf einen Saatenträger aufgestreut werden sollte. Erfindungsgemäß wird die Saat in eine Saatenform aufgenommen, die einen Teil einer vorkonfektionierten Saatenpackeinheit bildet, welche der Benutzer als Ganzes handhabt. Damit wird der Benutzer von der Aufgabe entbunden, eine bestimmte Saatdichte oder Schichtstärke der Saat selbst festzulegen. Diese ist in der vorkonfektionierten Saatenpackeinheit bereits voreingestellt.

Unter Saat werden vorliegend insbesondere auskeimungsfähige Lebensmittel, beispielsweise Samen, Hülsenfrüchte, Getreide oder Pseudogetreide zur Anzucht von Sprossen und/oder Keimlingen oder von Austrieben verstanden. Ferner kommen Samen für die Zucht erster chlorophyllenthaltender junger Austriebe, etwa von Gräsern, Getreiden oder Gemüse- und Wildpflanzensorten sowie Kräuter und Gewürze in Frage. Ferner soll der Begriff Saat weitere durch einen Wässerungsschritt aufschließbare Lebensmittel, wie quellfähige Getreideflocken und Nüsse, einschließen.

Erfindungsgemäß wird die Saat in einer günstigen vorkonfektionierten Lage gehalten. Eine mögliche Ausführungsform sieht unterteilte Saatenformen vor, die eine vorkonfektionierte Saatenpackeinheit in voneinander getrennte Segmente gliedert. Damit wird das Verrutschen der Saat beim Transport begrenzt. In einer alternativen Variante wird durch einen lebensmittelverträglichen Kleber eine örtliche Fixierung der Saat in den jeweiligen Segmenten der Saatenformen vorgenommen. Denkbar ist auch eine mittelbare Fixierung, beispielsweise indem die Saat in ein Gewebe aufgenommen ist, wobei durch dessen Befestigung an den Wandungen der Saatenform eine homogene Beladungsdichte sichergestellt wird.

Weiterhin sind Bodenöffnungen im wasserdurchlässigen Bodenbereich vorhanden, welche an die in der Saatenform aufgenommene Saat angepasst sind. Diese Anpassung besteht darin, dass die Bodenöffnungen einen Durchmesser aufweisen, der geringer ist als der maximale Durchmesser von Saatkörnern der Saat und der so gewählt ist, dass die Saatkörner partiell in die Bodenöffnungen eingelegt werden können, um ein seitliches Verrutschen zu verhindern. Der Durchmesser der Bodenöffnungen kann dabei insbesondere etwa 65%-95% des Durchmessers der Saatkörner betragen. Die Saatkörner können dann einzeln jeweils einer Bodenöffnung zugeordnet werden, so dass mindesten ein Teil der Saatkörner in die Bodenöffnungen eingelegt ist. Eine zusätzliche Fixierung kann dann mittels einer Kleberschicht, insbesondere unter Verwendung eines Eiweißklebers, beispielsweise aus Getreideeiweiß, erfolgen. Durch diese Maßnahme kann insbesondere erreicht werden, dass auch der Raum unterhalb des Saatenträgers für die sich ausbildenden Wurzeln zur Verfügung steht, so dass die Saatkörner auf dem Saatenträger insgesamt dichter gepackt werden können.

Die erfindungsgemäße vorkonfektionierte Saatenpackeinheit weist ferner ein Identifikationselement auf, das beispielsweise eine automatische Bestimmung der Art und/oder der Einstreudichte der Saat, ermöglicht. Ferner sind vorteilhafterweise weitere Informationen zur Saat, wie ein Mindesthaltbarkeitsdatum oder Herkunftsinformationen im Identifikationselement hinterlegt. Darüber hinaus kann das Identifikationselement erlauben, den die Auskeimung beeinflussenden Funktionselementen der vorkonfektionierten Saatenpackeinheit, insbesondere deren Wasserdurchlässigkeit und deren Wasserhaltefähigkeit, eine Kennung zuzuordnen und vorzugsweise diese als Identifikationsnummer in Form auslesbarer Daten abzuspeichern.

Des Weiteren sieht eine Weiterentwicklung die Ausgestaltung des Identifikationselements als Datenträger vor, um zusätzliche Benutzerinformationen, etwa Ernährungs- und Verarbeitungsvorschläge, abzuspeichern. In einer bevorzugten Ausführungsform ist im Identifikationselement ein individualisiertes Herkunfts- und Produktechtheitszertifikat in verschlüsselter Form abgelegt. Ferner ermöglicht eine weitere Variante der Erfindung das Beschreiben eines als Datenträger ausgebildeten Identifikationselements, um Behandlungsschritte im Verlauf des Auskeimungsprozesses zu dokumentieren.

Das Identifikationselement der erfindungsgemäßen vorkonfektionierten Saatenpackeinheit kann als Barcode, QR-Code, Magnetstreifen oder RFID-Transponder ausgebildet sein. Insbesondere können Teile der vorkonfektionierten Saatenpackeinheit als Form- oder Farbmarkierung zur Realisierung des Identifikationselements dienen. Mithin kann auch eine spezifische Form- oder Farbgestaltung von Funktionsteilen der vorkonfektionierten Saatenpackeinheit zur Codierung von Informationen dienen. Eine mögliche Ausführungsform besteht darin, die für die homogene Verteilung der Saat verwendete Unterteilung der Saatenform in Segmente zusätzlich als Identifikationselement einzusetzen, wobei aus der individualisierten Formgestaltung und/oder Größe der Segmente eine optisch detektierbare Information zur Beladung und/oder Art der vorkonfektionierten Saatenpackeinheit ableitbar ist.

In einer Variante des Identifikationselements als Datenträger umfasst dieses bevorzugt einen gegen Duplizierung oder Veränderung durch Dritte gesicherten Speicher. Hierzu kann insbesondere ein EMV-Chip verwendet werden. Denkbar ist ferner, auf dem Identifikationselement selbst nur individuelle Zugangsinformationen zu einer externen Datenspeichereinrichtung zu hinterlegen, die die eigentlichen Daten zur jeweiligen vorkonfektionierten Saatenpackeinheit liefert.

Weiterhin kann die vorkonfektionierte Saatenpackeinheit einen Saatengutträger mit einem wasserdurchlässigen Bodenbereich umfassen, der einen Teil der Saatenform darstellt. Demnach bildet die Saatenform der weitergestalteten vorkonfektionierten Saatenpackeinheit ein Funktionsteil, das den Wasserdurchfluss und das Wasserrückhaltevermögen bei einer Bewässerung mitbeeinflusst. Durch diese Maßnahme kann der wasserdurchlässige Bodenbereich des Saatengutträgers der Saatenform an die Art und die Beladungsdichte der aufgenommenen Saat angepasst werden. Zu diesem Zweck werden Art, Größe, Tiefe und Formgebung von Ablauföffnungen oder die Anordnung zusätzlicher aufsaugender Wasserrückhaltekomponenten, wie ein Einlegevlies, genutzt. Eine weitere Möglichkeit besteht darin, über die Materialwahl die Wasserhaltefähigkeit der Saatenform zu beeinflussen. Besonderes bevorzugt werden kompostierbare oder recyclingfähige Materialien mit einer gewissen Saugfähigkeit für den Saatengutträger. Ein denkbares Material umfasst Zellulose und Stärke aus pflanzlichem Ausgangsstoffen. Bevorzugte Ausgangsmaterialien sind Palmenblätter und Holzschliff.

Die vorkonfektionierte Saatenpackeinheit kann insbesondere einen zerstörbaren Einwegverschluss aufweisen, der im geschlossenen Zustand die Saatenform so abdeckt, dass die in die Saatenform aufgenommene, unausgekeimte Saat verliersicher gelagert ist. Der zerstörbare Einwegverschluss wird vor dem Einsetzen der vorkonfektionierten Saatenpackeinheit in einen Wässerungsautomaten entfernt. Gemäß einer bevorzugten Ausgestaltung ist der zerstörbare Einwegverschluss als Abziehfolie oder als Siegelfolie ausgebildet. Denkbar ist eine alternative Ausführung mit einer Bilsterverpackung als Einwegverschluss. Der zerstörbare Einwegverschluss kann im geschlossenen Zustand das Identifikationselement so abdecken, dass ein Auslesen verhindert wird. Im Fall eines Bar- oder QR-Codes oder einer Farb- und/oder Formmarkierung als Identifikationselement dient im einfachsten Fall ein opaker Abschnitt des zerstörbaren Einwegverschlusses als Ausleseschutz. Ein Benutzer ist daher gezwungen, die vorkonfektionierte Saatenpackeinheit vor dem Einführen in einen Bewässerungsautomaten zu öffnen.

Der Wässerungsautomat stellt eine weitere Komponente dar. Er dient dazu, eine automatische Befeuchtung oder Bewässerung für auskeimungsfähige Lebensmittel, insbesondere zur Anzucht von Sprossen und/oder Keimlingen oder von Austrieben, insbesondere von Getreiden, Gräsern und weitere Gemüse- und Wildpflanzensorten, bereitzustellen. Neben der Auskeimung ist die Behandlung weiterer durch einen Bewässerungsschritt aufgeschlossener Lebensmittel, wie quellfähige Getreide und Nüsse, möglich. Zur Erzielung günstiger Auskeimungs-, Wachstums- und/oder Quellbedingungen kann zusätzlich zur Befeuchtung eine automatisierte Zwangsbelüftung und/oder eine künstliche Beleuchtung und/oder eine Heizung vorgesehen sein. Dabei umfasst der Wässerungsautomat ein gesteuertes oder geregeltes Befeuchtungssystem und ein Gehäuse mit einem Innenraum zur Aufnahme einer oder mehrerer erfindungsgemäßer vorkonfektionierter Saatenpackeinheiten. Ferner umfasst der Wässerungsautomat eine Detektionseinheit für das Identifikationselement an der vorkonfektionierten Saatenpackeinheit.

Die Detektionseinheit des Wässerungsautomaten liest nach dem Einführen einer vorkonfektionierten Saatenpackeinheit automatisch eine Kennung aus, die es ermöglicht, die Art, Dauer und die Stärke der Befeuchtung und/oder die Belüftung im Wässerungsautomaten an die Art der vorkonfektionierten Saatenpackeinheit, insbesondere an die in der Saatenform aufgenommene, unausgekeimte Saat sowie an deren Beladungsdichte und bevorzugt an die Gestaltung eines wasserdurchlässigen Bodenbereichs des Saatengutträgers anzupassen. Daher besteht für einen Benutzer keine Notwendigkeit, selbst Auskeimungsparameter durch eine manuelle Steuerungseingabe festzulegen.

Vorzugsweise verarbeitet der Wässerungsautomat die durch die Detektionseinheit erfasste Informationen zur Art der eingelegten vorkonfektionierten Saatenpackeinheit zusätzlich durch einen Abruf von Informationen aus einem geräteeigenen Datenspeicher. Diese Informationen können Produkteigenschaften, wie den Vitalstoffgehalt und die Herkunft der in der eingelegten vorkonfektionierten Saatenpackeinheit befindlichen Saat, insbesondere für den späteren ausgekeimten Zustand, sein. Auch Zusatzinformationen, wie Rezepte, können für einen Benutzer angepasst ausgegeben werden.

Beispielsweise greift die Steuerung des Wässerungsautomaten nach dem Erkennen einer neu eingelegten vorkonfektionierten Saatenpackeinheit auf eine externe Datenbank, beispielsweise mittels einer Mobilfunk- oder einer kabelgebundenen Internetverbindung, zu, um jeweils die aktuellsten Verfahrensparameter für die gegebene Saat abzurufen. Denkbar ist ferner, mit einer solchen Abfrage zusätzlich die geräteeigene Datenbank oder die Gerätesteuerungssoftware zu aktualisieren. Anstatt einer mobilen oder drahtgebundenen Datenverbindung kann eine Aktualisierung der auf einem Speicher des Wässerungsautomaten abgelegten Prozess- oder Steuerungsdaten durch das Auslesen von auf dem Identifikationselement einer vorkonfektionierten Saatenpackeinheit abgelegten Zusatzdaten ausgeführt werden.

In einer bevorzugten Ausführung weist der Wässerungsautomat eine Detektionseinheit auf, die als Barcode-Leser, als QR-Leser, als RFID-Sender-/Empfängersystem, als Magnetstreifenleser, als EMV-Chip-Schreib-Leseeinheit oder als optisches Lesegerät zur Erkennung einer Form- und Farbmarkierung ausgebildet ist. Das optische Lesegerät kann eine Kamera sein, die eine sensorische Erweiterung darstellt, um zusätzlich den Auskeimungsprozess erfassen und quantifizieren zu können. Auch konstruktiv vereinfacht ausgeführte Detektionseinheiten mit taktilen oder optischen Sensoren, wie Taster oder Lichtschranken, sind denkbar, beispielsweise um ein als Identifikationsmarkierung dienendes Lochmuster an einer vorkonfektionierten Saatenpackeinheit erfassen zu können. Des Weiteren besteht die Möglichkeit, die Detektionseinheit mit unterschiedlichen Lesegeräten zu versehen, um einen Wässerungsautomaten mit verschiedenen Arten vorkonfektionierter Saatenpackeinheiten betreiben zu können.

Die Detektionseinrichtung des Wässerungsautomaten kann insbesondere nicht nur die Art einer vom Benutzer eingesetzten vorkonfektionierten Saatenpackeinheit erfassen, sondern es können beispielsweise zusätzlich individualisierte Informationen ausgelesen und von der Gerätesteuerung verarbeitet werden. Im einfachsten Fall ist dies ein Mindesthaltbarkeitsdatum der in der vorkonfektionierten Saatenpackeinheit aufgenommen Saat. Ist dieses überschritten, wird das automatische Auskeimungs- bzw. Wässerungsprogramm abgebrochen und eine entsprechende Information für den Benutzer an einem Gerätedisplay oder auf ein mit dem Wässerungssystem verbundenes mobiles Endgerät ausgeben.

Das Übertragen individualisierter Informationen durch das Identifikationselement einer eingelegten vorkonfektionierten Saatenpackeinheit kann ferner als Sicherheitsfunktion dienen. Wünscht der Benutzer, Saat für die Anzucht von Sprossen und Keimlingen nur von einer ihm bekannten, sicheren Quelle zu beziehen, kann ein im Identifikationselement verschlüsselt hinterlegtes Herkunfts- und Produktechtheitszertifikat ausgelesen werden. Zu diesem Zweck entschlüsselt ein in einem permanenten Speicher der Wässerungseinheit abgespeicherter Zugangscode verschlüsselte Informationen auf dem Identifikationselement, die eine einzelne vorkonfektionierte Saatenpackeinheit eindeutig festlegt. Diese Informationen verifiziert der Wässerungsautomat mittels einer Abfrage einer externen Datenbank, bevor das Zuchtprogramm gestartet wird. Nach der erfolgten Abfrage wird der Zugangscode in der Datenbank mit einem Sperrvermerk versehen. Dies verhindert den Zuchtstart einer weiteren vorkonfektionierten Saatenpackeinheit, für die nochmals derselbe Zugangscode eingegeben wird.

Wenn ein Identifikationselement verwendet wird, das zusätzlich eine Datenspeicherfunktion erfüllt, kann der Wässerungsautomat im Verlauf der Auskeimung Daten auf der vorkonfektionierten Saatenpackeinheit ablegen. Damit besteht die Möglichkeit, im Verlauf der Zucht eine Saatenform der Saatenpackeinheit, die das Identifikationselement trägt, zu entnehmen, zu überprüfen oder teilweise abzuernten und anschließend wieder in den Wässerungsautomaten einzusetzen. Dabei registriert der Wässerungsautomat das Wiedereinfügen einer bereits behandelten Saatenpackeinheit und setzt das Zuchtprogramm an der Unterbrechungsstelle fort.

Nach dem Durchlaufen des Zuchtprogramms sollte aus hygienischen Gründen eine Wiederverwendung einer vorkonfektionierten Saatenpackeinheit mit einem neuen Saatbesatz unterbleiben. Zu diesem Zweck deaktiviert die Wässerungseinheit das Identifikationselement einer vorkonfektionierten Saatenpackeinheit. Beispielsweise können durch einen mechanischen Eingriff Bar- oder QR-Codierungen unkenntlich gemacht oder Daten auf einem Magnetstreifen, einem RFID-Transponder oder einem EMV-Chip gelöscht werden. Ferner kommt die Löschung eines Sicherheitscodes in einer externen Datenbank infrage.

Eine Packeinheitaufnahme im Wässerungsautomaten kann eine zu einer aufzunehmenden vorkonfektionierten Saatenpackeinheit komplementäre Form aufweisen. Die Packeinheitaufnahme kann als Bewässerungswanne mit einem permanent offenen Bodenablauf oder als verschließbare Flutschale ausgebildet werden. In einer bevorzugten Ausführungsform stützt die Packeinheitaufnahme des Wässerungsautomaten die geöffnete vorkonfektionierte Saatenpackeinheit insbesondere nach dem Einweichen ab und kann mit dieser zusammen aus dem Wässerungsautomaten entnommen werden. Die komplementäre Formgestaltung ermöglicht es, eine vorkonfektionierte Saatenpackeinheit ohne aufwändige Justage in einer definierten Lage und in einer vorbestimmten Position in den Wässerungsautomaten einzusetzen. Dabei wird eine Ausführung bevorzugt, für die die vorkonfektionierte Saatenpackeinheit einen umlaufenden Randsteg zur Abstützung gegen einen Flansch an einer Packeinheitaufnahme des Wässerungsautomaten aufweist. Zusätzlich dient der umlaufende Randsteg der vorkonfektionierten Saatenpackeinheit als flächige Auflage und Klebefläche eines zerstörbaren Einwegverschlusses sowie zur Anbringung des Identifikationselements.

Ferner kann eine Packeinheitaufnahme im Wässerungsautomat zur Beeinflussung des Wasserdurchflusses dienen, indem sie als Durchlaufwanne oder als Tauchgefäß ausgebildet ist. Für die Befeuchtung dient ein Bewässerungssystem mit einer zugeordneten Steuerung. Dabei umfasst das Bewässerungssystem bevorzugt eine Sprinkleranordnung oder eine Vorrichtung zur Erzeugung eines Wassernebels, besonders bevorzugt in Kombination mit einer Tröpfchengrößenfiltereinheit.

Zusätzlich kann das Befeuchtungssystem vorteilhafterweise eine Ventilanordnung zur Steuerung des Wasserabflusses aufweisen. Bevorzugt sind die zugehörigen Ventile in einer Flutungseinheit verbaut. Des Weiteren kann das abfließende Wasser gemäß einer vorteilhaften Ausgestaltung in einem im Bodenbereich des Wässerungsautomaten angeordneten Zwischentank bevorratet und durch eine zyklisch arbeitende Pumpvorrichtung in einem vom Benutzer entnehmbaren Schmutzwassertank umgepumpt werden. Des Weiteren kann ein für den Benutzer zugänglicher stationär befüll- oder entnehmbarer Frischwassertank vorhanden sein.

Daneben kann der Wässerungsautomat bevorzugt eine Beleuchtungsvorrichtung zur Beleuchtung einer geöffneten und in den Wässerungsautomat eingesetzten vorkonfektionierten Saatenpackeinheit aufweisen. Die Beleuchtungseinheit emittiert vorteilhafterweise elektromagnetische Strahlung mit einem tageslichtähnlichen Spektrum.

Des Weiteren kann der Wässerungsautomat bevorzugt eine Benutzerschnittstelle mit einer Eingabefunktion umfassen. Denkbar ist ein berührungsempfindlicher Bildschirm und/oder ein Kommunikationsmodul zur Ausbildung einer Schnittstelle zu einem mobilen Endgerät, insbesondere eine Mobilfunkschnittstelle, eine Bluetooth- oder WiFi-Schnittstelle.

Das Auskeim- bzw. Wässerungsverfahren kann durch einen unerfahrenen Benutzer ausgeführt werden. Zunächst ist ein zerstörbarer Einwegverschluss, der bevorzugt zur Abdeckung der Saatenform an der vorkonfektionierten Saatenpackeinheit dient, abzunehmen. Ein Wiederverschluss wird bevorzugt ausgeschlossen, sodass sichergestellt ist, dass die hygienisch verpackte, unausgekeimte Saat keiner Kontamination unterliegt oder durch einen unsachgemäßen Benutzereingriff eine Änderung der Vorkonfektionierung ausgeführt wird. Die geöffnete vorkonfektionierte Saatenpackeinheit wird sodann vom Benutzer in den Wässerungsautomaten eingeführt. Die gemäß einer bevorzugten Ausgestaltung vorgesehene komplementäre Form der Packeinheitaufnahme im Wässerungsautomaten erlaubt ein intuitives, fehlersicheres Einsetzen in einer definierten Sollposition.

Für den Benutzer erübrigt sich eine manuelle Benutzereingabe nach dem Einführen der vorkonfektionierten Saatenpackeinheit in den Wässerungsautomaten. Die Steuerung erkennt die Art der vorkonfektionierten Saatenpackeinheit durch eine Detektion des Identifikationselements, sodass ein hierfür angepasstes Zuchtprogramm automatisch gewählt wird. Für eine vorteilhafte Weitergestaltung überprüft der Wässerungsautomat anhand zusätzlicher auf dem Identifikationselement abgelegter Daten das Mindesthaltbarkeitsdatum und führt bevorzugt mit den Daten eine Abfrage einer externen Datenbank aus, um ein ausgelesenes Herkunfts- und Produktechtheitszertifikat zu überprüfen. Des Weiteren werden Maßnahmen ausgeführt, um zu verhindern, dass Teile der Saatenpackeinheit, beispielsweise die Saatenform, nach einem abgeschlossenen Zuchtzyklus nochmals mit einer neuen Saat benutzt werden. Dies kann durch eine von der Wässerungseinheit ausgeführte Zerstörung des Identifikationselements oder die Löschung der auf diesem befindlichen Daten oder durch einen Eintrag in einer zur Zertifikatüberprüfung genutzten externen Datenbank geschehen.

Nachfolgend wird die Erfindung anhand der Figuren erläutert. Es zeigt:
- Fig. 1: eine erste Ausführungsform einer erfindungsgemäßen vorkonfektionierten Saatenpackeinheit im geöffneten Zustand,
- Fig. 2: die erste Ausführungsform der erfindungsgemäßen vorkonfektionierten Saatenpackeinheit gemäß Fig. 1 im verschlossenen Zustand,
- Fig. 3: eine zweite Ausführungsform einer erfindungsgemäßen vorkonfektionierten Saatenpackeinheit im geöffneten Zustand in Aufsichtdarstellung,
- Fig. 4: eine dritte Ausführungsform einer erfindungsgemäßen vorkonfektionierten Saatenpackeinheit im geöffneten Zustand in Aufsichtdarstellung,
- Fig. 5: eine vierte vorliegend nicht beanspruchte Ausführungsform einer vorkonfektionierten Saatenpackeinheit im geöffneten Zustand in Aufsichtdarstellung,
- Fig. 6: die Komponenten eines Wässerungsautomaten in schematisiert vereinfachter Funktionsansicht,
- Fig. 7: eine vorteilhafte Variante einer erfindungsgemäßen Saatenpackeinheit, und
- Fig. 8 und 9: weitere Präzisierungen der in Figur 7 dargestellten Saatenpackeinheit.

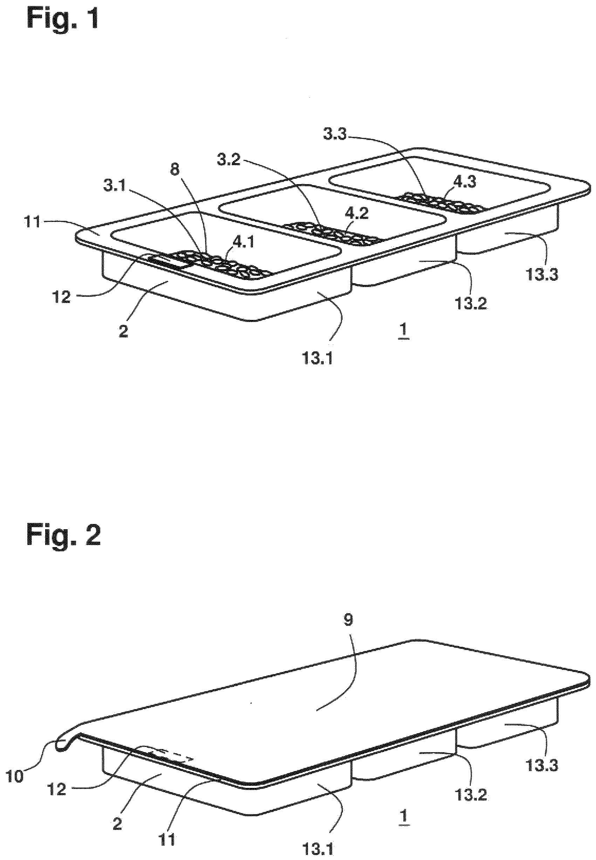

Fig. 1 zeigt schematisch vereinfacht eine Ausführung einer erfindungsgemäßen vorkonfektionierten Saatenpackeinheit 1 im geöffneten Zustand. Diese umfasst eine Saatenform 2, die für die dargestellte Ausführung drei stoffschlüssig verbundene Segmente 13.1, 13.2, 13.3 aufweist, die jeweils mit einer unausgekeimten Saat 8 befüllt sind. Die Segmentierung dient dazu, die Saat 8 gleichmäßig über einen wasserdurchlässigen Bodenbereich 3.1, 3.2, 3.3 der Saatenform 2 verteilt zu halten.

Des Weiteren weist die vorkonfektionierte Saatenpackeinheit 1 ein Identifikationselement 12 auf, das auf einem einteilig mit der Saatenform 2 verbundenen umlaufenden Randsteg 11 angeordnet ist. Das Identifikationselement 12 ermöglicht eine automatisierte Erkennung der in der vorkonfektionierten Saatenpackeinheit 1 eingelagerten Saat 8 sowie eine Bestimmung der Ausführung der Saatenform 2 insbesondere im Hinblick auf die Wasserdurchlässigkeit und die Wasserspeicherkapazität. Das Identifikationselement 12 kann als Barcode, als QR-Code, als RFID-Transponder, als Farb- und/oder Formmarkierung, als Magnetstreifen oder als EMV-Chip ausgeführt sein.

Fig. 2 zeigt das Ausführungsbeispiel gemäß Fig. 1 im geschlossenen Zustand. Ersichtlich ist ein zerstörbarer Einwegverschluss 9 in Form einer Abreißfolie mit einer Aufreißlasche 10 zur Versiegelung der Saatenform 2, der mit dem umlaufenden Randsteg 11 flächig verklebt ist. Der zerstörbare Einwegverschluss 9 deckt im geschlossenen Zustand das Identifikationselement 12 ab, sodass dieses vor dem Öffnen der vorkonfektionierten Saatenpackeinheit 1 nicht ausgelesen werden kann. Für eine Ausführung mit einem berührungslos und nicht mittels eines optischen Verfahrens auslesbaren Identifikationselements 12 können alternative Mittel zur Abschirmung in den zerstörbaren Einwegverschluss 9 aufgenommen werden, um das Auslesen ohne ein Aufbrechen der Versiegelung zu verhindern.

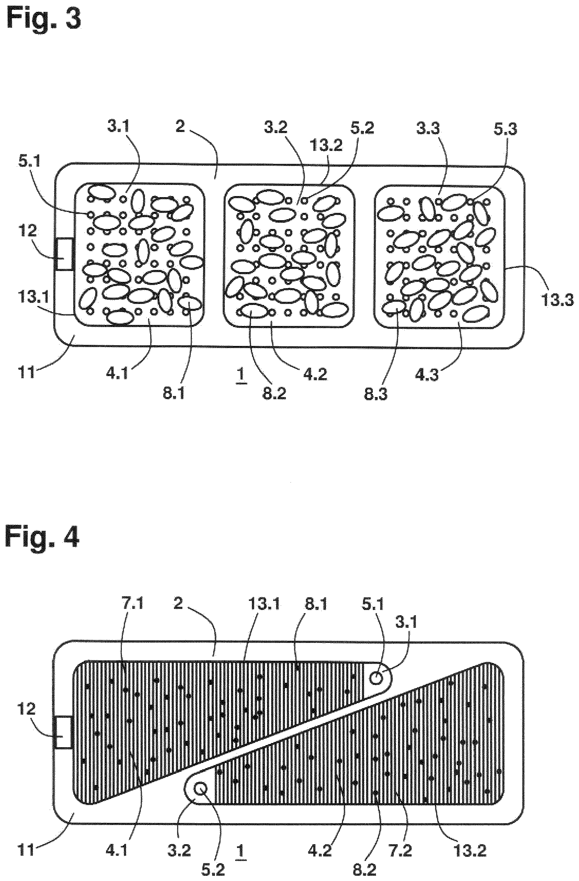

Die Aufsicht auf den geöffneten Zustand einer zweiten Ausführung einer erfindungsgemäßen vorkonfektionierten Saatenpackeinheit 1 ist in Fig. 3 dargestellt. Ersichtlich ist, dass jedes der Segmente 13.1, 13.2, 13.3 der Saatenform 2 einen wasserdurchlässigen Bodenbereich 3.1, 3.2, 3.3 aufweist. Die dargestellten Bodenöffnungen 5.1, 5.2, 5.3 sind bezüglich der Formgebung, Größe und Anordnung für die Segmente 13.1, 13.2, 13.3 an eine aus Bohnen bestehende unausgekeimte Saat 8.1, 8.2, 8. 3 angepasst, um die vorkonfektionierte Saatenpackeinheit 1 in einem Bewässerungsautomaten zyklischen Tauchvorgängen zu unterziehen. Die entsprechenden Informationen zum wasserdurchlässigen Bodenbereich 3.1, 3.2, 3.3 und zur Saat 8.1, 8.2, 8. 3 sind im Identifikationselement 12 abgelegt oder können nach einer Identifizierung in einem Bewässerungsautomaten aus einem internen Gerätespeicher oder einer externen Datenbank ausgelesen werden.

Fig. 4 zeigt ein drittes Ausführungsbeispiel einer erfindungsgemäßen vorkonfektionierten Saatenpackeinheit 1 in Aufsichtdarstellung. In den Segmenten 13.1, 13.2 der Saatenform 2 ist eine unausgekeimte Saat 8.1, 8.2 mit einem kleinen Saatkorndurchmesser aufgenommen. Um zu verhindern, dass die kleinkörnige Saat 8.1, 8.2 bei einer Tropfenbewässerung durch die an den sich verengenden Enden der Segmente 13.1, 13.2 angeordneten Bodenöffnungen 5.1, 5.1 ausgeschwemmt wird, ist als Rückhaltemaßnahme eine quer zur Strömungsrichtung verlaufende und an den Saatkorndurchmesser angepasste Riffelung 7.1, 7.2 am Grund der Saatenform 2 vorgesehen. Für eine Weitergestaltung wird die unausgekeimte Saat 8.1, 8.2 zusätzlich zu den physikalischen Rückhaltemaßnahmen am Boden der Saatenform 2 mittels eines biokompatiblen und lebensmittelverträglichen Klebers fixiert. Diese im Einzelnen nicht dargestellte Klebschicht kann beispielsweise mittels eines Pektinklebers angelegt sein.

Die maximale Beregnungsstärke, die noch zu keiner Ausschwemmung der Saat führt, ist auf dem Identifikationselement 12 abgespeichert. Alternativ kann diese Information nach einer Identifizierung der vorkonfektionierten Saatenpackeinheit 1 in einem Bewässerungsautomaten aus einem internen Gerätespeicher oder durch die Abfrage einer externen Datenbank automatisiert ermittelt werden.

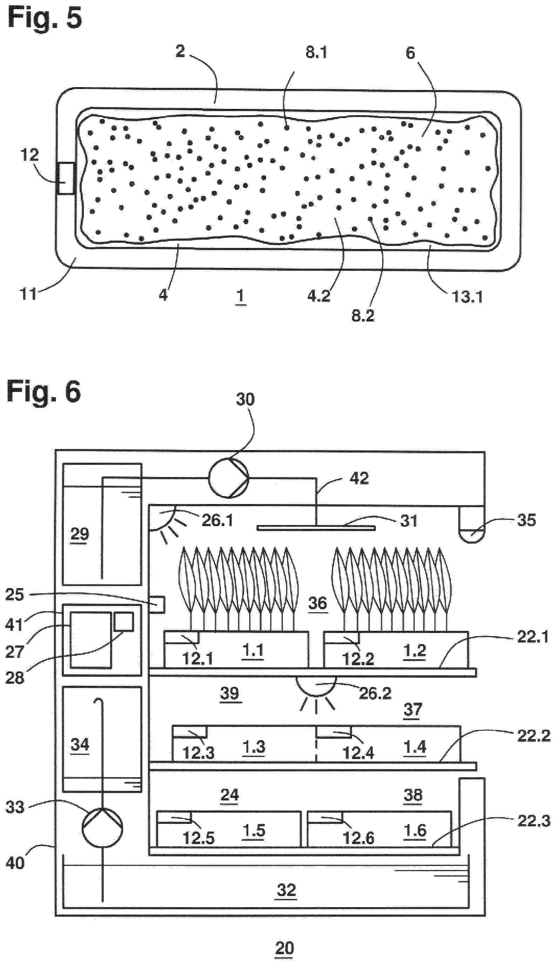

Fig. 5 stellt ein viertes vorliegend nicht beanspruchtes Ausführungsbeispiel einer vorkonfektionierten Saatenpackeinheit 1 in Aufsichtdarstellung dar, das keinen wasserdurchlässigen Bodenbereich in der Saatenform 2 aufweist. Stattdessen ist ein Wasser aufsaugendes Gewebe 6 vorgesehen, das die unausgekeimte Saat 8.1, 8.2 aufnimmt. Durch im Einzelnen nicht dargestellte Maßnahmen ist das Gewebe 6 innerhalb des Segments 13.1 ortsfestgelegt, sodass bei einer Ausbildung des Gewebes 6 mit kleinen freien Wegen die vorkonfektionierte homogene Verteilung der unausgekeimten Saat 8.1 beim Transport der vorkonfektionierten Saatenpackeinheit 1 und bei der Bewässerung im Verlauf der Auskeimung im Wässerungsautomat beibehalten wird.

Die vierte Ausführung ist insbesondere zur Befeuchtung mittels eines Wassernebels geeignet, wobei die einsprechenden Verfahrensbedingungen für die Auskeimung auf dem Identifikationselement 12 hinterlegt sind oder nach einer Identifikation nach dem Einlegen in einen Bewässerungsautomaten ohne eine manuelle Benutzereingabe durch die Gerätesteuerung aus einer internen oder externen Datenbank ermittelt wird.

Weitere im Einzelnen nicht dargestellte Ausführungsformen mit uneinheitlich beladenen, gleichwohl mehrfach unterteilten Segmenten zur Ausbildung einer Saatenform 2 einer erfindungsgemäßen vorkonfektionierten Saatenpackeinheit 1 sind denkbar. Dabei werden insbesondere Ausführungsformen bevorzugt, für die mehrere lateral aneinander anschließende vorkonfektionierte Saatenpackeinheiten im gleichen Funktionskompartiment eines Wässerungsautomaten, in dem die gleichen Wachstumsbedingungen vorliegen, aufgenommen werden können.

Fig. 6 zeigt die Komponenten eines Wässerungsautomat 20 in schematisiert vereinfachter Funktionsansicht. In den Wässerungsautomat 20 sind Ausführungen der voranstehend beschriebenen, erfindungsgemäßen vorkonfektionierten Saatenpackeinheiten 1.1, 1.2, 1.3, 1.4, 1.5, 1.6 aufgenommen. Auf der obersten Funktionsebene 36 liegen die vorkonfektionierten Saatenpackeinheiten 1.1, 1.2 auf einer Packeinheitaufnahme 22.1 auf.

Der obersten Funktionsebene 36 ist eine Beleuchtungseinheit 26.1 und eine Sprinkleranordnung 31 zugeordnet. Die Sprinkleranordnung 31 wird über eine Frischwasserpumpe 30 aus einem Frischwassertank 29 gespeist und steht in Verbindung mit einer Steuerungsvorrichtung 41. Für die dargestellte bevorzugte Ausgestaltung wird mittels einer Leseeinheit 25 ein an der vorkonfektionierten Saatenpackeinheit 1.1 angebrachtes Identifikationselement 12.1 ausgelesen. Entsprechende Markierungen können die vorkonfektionierten Saatenpackeinheiten 1.2 - 1.6 in Form der Identifikationselemente 12.2 - 12.6 aufweisen, die ebenfalls durch die Leseeinheit 25 erfasst werden. Nach dem Auslesen durch die Leseeinheit 25 erhält die Steuerungsvorrichtung 41 des Wässerungsautomaten 20 ohne eine weitere Benutzereingabe die notwendigen Informationen, um ein angepasstes Auskeimungsprogramm mit einer zeitlichen Steuerung der Befeuchtung und Beleuchtung und gegebenenfalls einer Ansteuerung einer im Einzelnen nicht dargestellten Belüftung für die jeweilige vorkonfektionierte Saatenpackeinheiten 1.1 - 1.6 auszuführen.

Für eine besonders bevorzugte Ausgestaltung sind die Identifikationselemente 12.1 - 12.6 so an den vorkonfektionierten Saatenpackeinheiten 1.1 - 1.6 angeordnet, dass diese erst nach der Abnahme eines zerstörbaren Einwegverschlusses 9 offenliegen und/oder auslesbar sind. Durch diese Maßnahme wird sichergestellt, dass keine Falschbeladung des Wässerungsautomaten 20 durch eine noch verschlossene vorkonfektionierte Saatenpackeinheit 1.1 - 1.6 möglich ist.

Die oberste Funktionsebene 36 des Wässerungsautomaten 20 weist einen relativ hohen Wachstumsraum über der Packeinheitaufnahme 22.1 auf, der nach dem Auskeimen der Saat ein hinreichendes Wachstum von chlorophyllhaltigen Pflanzenaustrieben ermöglicht. Demnach eignet sich die oberste Funktionsebene 36 zur Anzucht von Getreideschösslingen, deren Wachstum mittels eines optischen Systems, beispielsweise einer Kamera 35, erfasst werden kann. Diese Bilddaten werden durch ein Kommunikationsmodul 28, beispielsweise eine Mobilfunkschnittstelle, eine Bluetooth-Verbindung oder ein WiFi-Kommunikationsmodul, auf ein mobiles Endgerät eines Benutzers übertragen. Des Weiteren können Betriebs- und Wachstumsinformationen über die Benutzerschnittstelle 27 an der Frontfläche des Gehäuses 40 ausgegeben werden. Diese ermöglicht ferner manuelle Nutzereingaben.

Die in der mittleren Funktionsebene 37 des Wässerungsautomaten 20 auf der Packeinheitaufnahme 22.2 aufgenommenen vorkonfektionierten Saatenpackeinheiten 1.3, 1.4 bilden durch formschlüssige, laterale Anlage ein zusammenhängendes Zuchtbeet. Die für das Wachstum von Keimlingen und Schösslingen notwendige Beleuchtung wird mittels einer im Bodenbereich der darüberliegenden Packeinheitaufnahme 21.1 angebrachten Beleuchtungseinheit 26.2 realisiert. Zur Befeuchtung kann das aus der obersten Funktionsebene 36 herunterrieselnde Wasser dienen; ebenso kann eine in der Figur nicht gesondert dargestellte Sprinkleranordnung in der Art der für die oberste Funktionsebene verwendeten Sprinkleranordnung 31 zur Befeuchtung verwendet werden.

Die unterste Funktionsebene 38 des Wässerungsautomaten 20 weist keine Beleuchtungseinheit auf und dient insbesondere zum Auskeimen von Sprossen in einer dunklen Umgebung und/oder zum Einweichen von Nüssen, Kernen, Hülsenfrüchten, Getreide oder Pseudogetreide. Die Packeinheitaufnahme 22.3 der untersten Funktionsebene 34 liegt, die vorkonfektionierten Saatenpackeinheiten 1.5, 1.6 abstützend, innerhalb einer Flutschale 24, die ein vollständiges Tauchen der Saat ermöglicht. Der Tauchvorgang muss zyklisch erfolgen, sodass im Einzelnen nicht dargestellte steuerbare Ventileinrichtungen die Drainage der Flutschale 24 und einen Wasserablauf in einen darunterliegenden Zwischentank 32 ermöglichen.

Das sich im Zwischentank 32 ansammelnde Abtropfwasser kann mittels einer zyklisch im Rahmen der automatischen Anlagensteuerung aktivierten Schmutzwasserpumpe 33 in einen abnehmbaren Schmutzwassertank 34 umgepumpt werden. Damit wird ein dauerhafter Pumpbetrieb vermieden und der Zwischentank 32 nur beim Übersteigen einer Höchstfüllmarke oder einer vom Benutzer manuell aktivierten Entleerung betätigt.

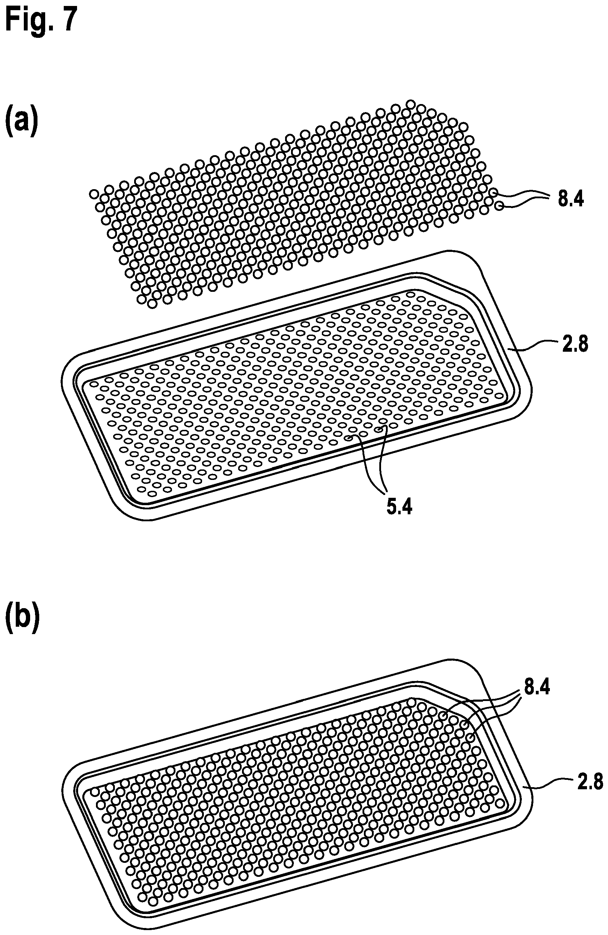

Figur 7 zeigt in den Teilfiguren (a) und (b) eine Variante der Erfindung, mittels welcher eine verdichtete Anordnung der Saatkörner in der Saatenform möglich wird. Dazu ist der Bodenbereich der Saatenform 2.8 mit Bodenöffnungen 5.4 in einem bestimmten Raster, abhängig von der Art der Saat, versehen. Der Durchmesser der Bodenöffnungen 5.4 ist dabei geringer als der Durchmesser der Saatkörner 8.4, so dass die Saatkörner 8.4 auf die Bodenöffnungen 5.4 gesetzt werden können, oder durch die Bodenöffnungen 5.4 zu fallen, aber eine gewisse laterale Vorfixierung der Saatkörner 8.4 gewährleistet ist. In Figur 7 (a) ist die Zuordnung der Saatkörner 8.4 zu den Bodenöffnungen 5.4 veranschaulicht, während Figur 7(b) die Saatenform 2.8 mit den in den Bodenöffnungen 5.4 eingesetzten Saatkörnern zeigt.

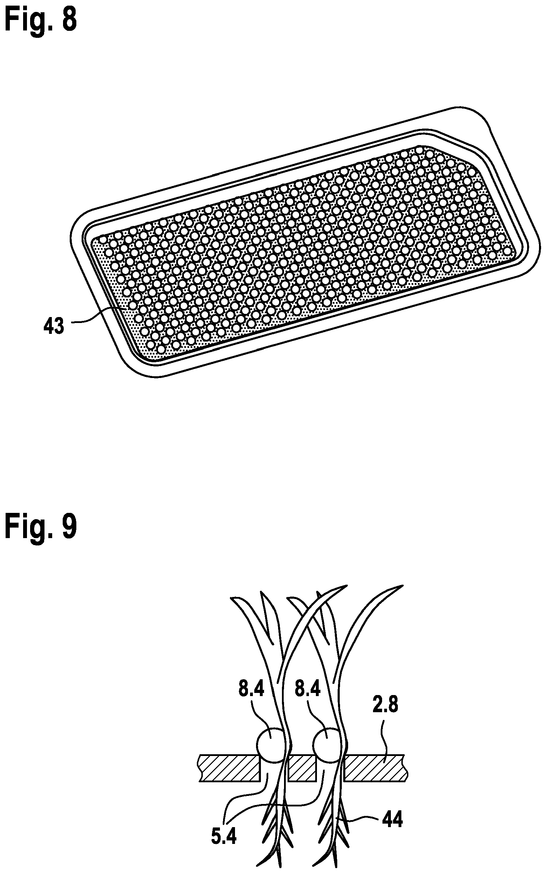

In einem nächsten Schritt können dann die Saatkörner 8.4 mit einem Kleber, beispielsweise einem biologischen Eiweißkleber 43, insbesondere aus Getreideeiweiß, überzogen werden, so dass die Saatkörner ihre Position halten. In Figur 8 ist die Saatenform 2.8 mit den Saatkörnern 8.4 zu sehen, wobei die Saatkörner 8.4 von einer Schicht aus Kleber 43 in der Saatenform gehalten werden.

Figur 9 zeigt in einer seitlichen Schnittdarstellung einen Ausschnitt einer Saatenform nach dem Einsetzen und Wässern in einem Wässerungsautomaten. Durch die Wässerung hat sich der Kleber aufgelöst und die zwischenzeitlich ausgekeimten Saatkörner haben Wurzeln 44 ausgebildet, die die Bodenöffnungen 5.4 durchtreten und sich in den freien Raum unterhalb der Saatenform 2.8 erstrecken. Dadurch wird einerseits eine weitere Fixierung der Saatkörner 8.4 auch nach Auflösen des Klebers 43 erreicht, so dass auch die Saatenformen mit ausgekeimten Saatkörnern 8.4 aus dem Wässerungsautomaten entnommen werden können, ohne dass es zu einem Verrutschen kommt. Darüber hinaus wird durch die Zuordnung der Saatkörner 8.4 zu den Bodenöffnungen 5.4 erreicht, dass den Wurzeln 44 auch der Raum unterhalb der Saatenform 2.8 erreicht werden kann, so dass ein horizontales Wurzeln oberhalb der Saatenform 2.8 gegenüber einer Variante ohne Zuordnung der Saatkörner 8.4 zu Bodenöffnungen nicht im selben Ausmaß erforderlich ist. Auf diese Weise wird es möglich, die Saatkörner 8.4 dichter auf der Saatenform 2.8 zu packen und die zur Verfügung stehende Fläche besser auszunutzen.

Weitere Ausgestaltungen der Erfindung sind im Rahmen der nachfolgenden Patentansprüche möglich.

**Bezugszeichen**
- 1, 1.1, 1.2, 1.3,:
- 1.4, 1.5, 1.6: vorkonfektionierte Saatenpackeinheit
- 2, 2.8: Saatenform
- 3.1, 3.2, 3.3: wasserdurchlässiger Bodenbereich
- 4, 4.1, 4.2, 4.3: Saatengutträger
- 5.1, 5.2, 5.3, 5.4: Bodenöffnung
- 6: Gewebe
- 7.1, 7.2: Riffelung
- 8, 8.1, 8.2, 8.3, 8.4: unausgekeimte Saat, Saatkörner
- 9: zerstörbaren Einwegverschluss
- 10: Aufreißlasche
- 11: umlaufender Randsteg
- 12, 12.1, 12.2: Identifikationselement
- 13.1, 13.2, 13.3: Segment
- 20: Wässerungsautomat
- 21: Innenraum
- 22.1, 22.2, 22. 3: Packeinheitaufnahme
- 24: Flutschale
- 25: Leseeinheit
- 26.1, 26.2: Beleuchtungseinheit
- 27: Benutzerschnittstelle
- 28: Kommunikationsmodul
- 29: Frischwassertank
- 30: Frischwasserpumpe
- 31: Sprinkleranordnung
- 32: Zwischentank
- 33: Schmutzwasserpumpe
- 34: Schmutzwassertank
- 35: Kamera
- 36: oberste Funktionsebene
- 37: mittlere Funktionsebene
- 38: untere Funktionsebene
- 39: Innenraum
- 40: Gehäuse
- 41: Steuerungsvorrichtung
- 42: Bewässerungsvorrichtung
- 43: Kleber
- 44: Wurzel

## Patentansprüche

1. Vorkonfektionierte Saatenpackeinheit zur Bestückung eines Wässerungsautomaten (20), umfassend
eine Saatenform (2);
eine in die Saatenform (2) aufgenommene, unausgekeimte Saat (8.1, 8.2, 8.3);
und ein Identifikationselement (12, 12.1, 12.2), das eine automatische Bestimmung der Art der Saat ermöglicht, wobei die Saatenform (2) einen Saatenträger (4.1, 4.2, 4.3) mit einem wasserdurchlässigen Bodenbereich (3.1, 3.2, 3.3) mit Bodenöffnungen (5.1, 5.2, 5.3) aufweist, welche an die in der Saatenform (2) aufgenommene Saat (8.1, 8.2, 8.3) angepasst sind, **dadurch gekennzeichnet, dass** die Bodenöffnungen (5.4) einen Durchmesser aufweisen, der geringer ist als der maximale Durchmesser von Saatkörnern (8.4) der Saat (8.1, 8.2, 8.3) und so gewählt ist, dass die Saatkörner (8.4) partiell in die Bodenöffnungen (5.4) eingelegt werden können und dass mindestens ein Teil der Saatkörner (8.4) in die Bodenöffnungen (5.4) eingelegt ist.

2. Vorkonfektionierte Saatenpackeinheit nach Anspruch 1,
**dadurch gekennzeichnet, dass**
das Identifikationselement (12, 12.1, 12.2) ein Barcode, ein QR-Code, ein RFID-Transponder, eine Farb- und/oder Formmarkierung, ein Magnetstreifen oder ein EMV-Chip ist.

3. Vorkonfektionierte Saatenpackeinheit nach einem der Ansprüche 1 oder 2,
**dadurch gekennzeichnet, dass**
die Saatenform (2) Segmente (13.1, 13.2, 13.3) umfasst.

4. Vorkonfektionierte Saatenpackeinheit nach einem der vorausgehenden Ansprüche,
**dadurch gekennzeichnet, dass**
die Saat (8.1, 8.2, 8.3) an der Saatenform (2) mittels eines Klebers fixiert ist.

5. Vorkonfektionierte Saatenpackeinheit nach einem der vorausgehenden Ansprüche,
**dadurch gekennzeichnet, dass**
die Saatenform (2) im geschlossenen Zustand durch einen zerstörbaren Einwegverschluss (9) versiegelt ist, der die Saatenform (2) so abdeckt, dass die Saat (8.1, 8.2, 8.3) verliersicher in der Saatenform (2) gelagert ist.

## Claims

1. Prefabricated seed-packaging unit for loading into
a watering machine (20), comprising
a seed holder (2);
ungerminated seed (8.1, 8.2, 8.3), which is accommodated in the seed holder (2);
and an identification element (12, 12.1, 12.2), which provides for automatic determination of the type of seed, wherein the seed holder (2) has a seed carrier (4.1, 4.2, 4.3) having a water-permeable base region (3.1, 3.2, 3.3) with base openings (5.1, 5.2, 5.3), which are adapted to the seed (8.1, 8.2, 8.3) accommodated in the seed holder (2), **characterized in that** the base openings (5.4) have a diameter which is smaller than the maximum diameter of grains (8.4) of the seed (8.1, 8.2, 8.3) and is selected such that the grains (8.4) of seed can be positioned to a partial extent in the base openings (5.4), and that at least part of the grains (8.4) of seed is positioned in the base openings (5.4).

2. Prefabricated seed-packaging unit according to Claim 1,
**characterized in that**
the identification element (12, 12.1, 12.2) is a barcode, a QR code, an RFID transponder, a colour and/or shape marking, a magnetic strip or an EMC chip.

3. Prefabricated seed-packaging unit according to either of Claims 1 and 2,
**characterized in that**
the seed holder (2) comprises segments (13.1, 13.2, 13.3).

4. Prefabricated seed-packaging unit according to one of the preceding claims,
**characterized in that**
the seed (8.1, 8.2, 8.3) is fixed on the seed holder (2) by means of an adhesive.

5. Prefabricated seed-packaging unit according to one of the preceding claims,
**characterized in that**,
in the closed state, the seed holder (2) is sealed by a breakable disposable closure (9), which covers the seed holder (2) such that the seed (8.1, 8.2, 8.3) is stored in captive fashion in the seed holder (2).

## Revendications

1. Unité de conditionnement de semences préconfectionnée destinée à équiper une laveuse automatique (20), comprenant
un moule à semences (2) ;
une semence non dégermée (8.1, 8.2, 8.3), placée dans le moule à semences (2) ;
et un élément d'identification (12, 12.1, 12.2) permettant d'identifier automatiquement la nature de la semence, le moule à semences (2) comportant un porte-semences (4.1, 4.2, 4.3), dont une zone du fond est perméable à l'eau (3.1, 3.2, 3.3) et présente des ouvertures de fond (5.1, 5.2, 5.3) adaptées à la semence (8.1, 8.2, 8.3) qui se trouve dans le moule à semences (2), **caractérisée en ce que** le diamètre des ouvertures de fond (5.4) est inférieur au diamètre maximal des graines de semence (8.4) de la semence (8.1, 8.2, 8.3) et choisi de sorte que les graines de semence (8.4) puissent être partiellement insérées dans les ouvertures de fond (5.4) et qu'au moins une partie des graines de semence (8.4) soit insérée dans les ouvertures de fond (5.4).

2. Unité de conditionnement de semences préconfectionnée selon la revendication 1, **caractérisée en ce que**
l'élément d'identification (12, 12.1, 12.2) est un code à barres, un code QR, un transpondeur RFID, un marquage de forme ou de couleur, une piste magnétique ou une puce EMV.

3. Unité de conditionnement de semences préconfectionnée selon l'une quelconque des revendications 1 et 2, **caractérisée en ce que** le moule à semences (2) comprend des segments (13.1, 13.2, 13.3).

4. Unité de conditionnement de semences préconfectionnée selon l'une quelconque des revendications précédentes, **caractérisée en ce que** la semence (8.1, 8.2, 8.3) est fixée au moule à semences (2) par de la colle.

5. Unité de conditionnement de semences préconfectionnée selon l'une quelconque des revendications précédentes, **caractérisée en ce que**, lorsqu'il est fermé, le moule à semences (2) est scellé par une fermeture destructible à usage unique (9) qui recouvre le moule à semences (2) de telle sorte que la semence (8.1, 8.2, 8.3) soit entreposée dans le moule à semences (2) sans risque de perte.
